Europäisches Patentamt

European Patent Office

Office européen des brevets

(11) Numéro de publication : **0 084 480**
**B1**

# FASCICULE DE BREVET EUROPÉEN

(45) Date de publication du fascicule du brevet :
24.04.85

(51) Int. Cl.⁴ : **G 21 C   3/32**

(21) Numéro de dépôt : **83400053.1**

(22) Date de dépôt : **10.01.83**

(54) **Pièce d'extrémité d'assemblage combustible de réacteurs nucléaires dans laquelle les parois latérales sont élastiques.**

(30) Priorité : **18.01.82 FR 8200672**

(43) Date de publication de la demande :
**27.07.83 Bulletin 83/30**

(45) Mention de la délivrance du brevet :
**24.04.85 Bulletin 85/17**

(84) Etats contractants désignés :
**BE DE GB IT NL**

(56) Documents cités :
**DE-A- 1 816 561**
**DE-A- 2 023 587**
**DE-A- 2 742 692**
**DE-B- 1 225 313**
**FR-A- 2 171 279**
**GB-A- 1 418 495**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Feutrel, Claude**
**105 Grande Rue**
**F-91430 Vauhallan (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention a pour objet une pièce d'extrémité d'assemblage combustible de réacteur nucléaire dans laquelle les parois latérales sont élastiques.

Les assemblages combustibles de réacteur nucléaire refroidi à l'eau sont généralement constitués de deux pièces d'extrémités rigides, une pièce d'extrémité inférieure et une pièce d'extrémité supérieure fixées à chaque extrémité de tubes guides rigides. Sur les tubes guides sont disposées plusieurs grilles d'espacement qui constituent la structure de maintien du faisceau de crayons combustibles.

Des assemblages de ce type sont disposés, lorsqu'ils sont en place dans le cœur du réacteur, entre une plaque interne supérieure et une plaque interne inférieure qui font partie de la charpente aménagée dans la cuve du réacteur. Ils sont généralement positionnés par rapport aux plaques du cœur par des pions de centrage disposés sur lesdites plaques. Ils sont balayés longitudinalement de bas en haut par un courant d'eau de réfrigération. L'effet de la compression axiale exercée par la mise en place de la structure interne supérieure sur la cuve du réacteur et la différence entre les coefficients de dilatation thermique des matériaux utilisés dans la structure du réacteur nucléaire et ceux utilisés dans la structure de l'assemblage combustible interdisent la fixation rigide de ceux-ci sur les plaques inférieure et supérieure de la charpente du cœur.

C'est pourquoi, de façon classique, on interpose entre chaque assemblage et l'une des plaques de cœur un élément élastique qui repousse l'assemblage contre la plaque opposée.

On connaît de nombreuses réalisations de pièces d'extrémité d'assemblages combustibles de réacteurs nucléaires. A titre d'exemple, l'assemblage combustible décrit dans le brevet français FR-A-2 049 108 comporte des ressorts à lames fixés sur la pièce d'extrémité supérieure par des blocs de pression traversés par des vis de fixation. Les ressorts permettent l'expansion de l'assemblage combustible tout en le maintenant constamment plaqué contre la plaque inférieure du cœur.

Cependant, des ressorts de ce type sont soumis à une température élevée, de l'ordre de 300 ℃, et à un rayonnement intense. C'est pourquoi leurs propriétés mécaniques se détériorent dans le temps et une rupture de leur partie élastique est toujours à craindre. La partie rompue pourrait alors être entraînée dans le circuit de l'eau de refroidissement, ce qui y provoquerait des dégâts.

La présente invention a précisément pour objet une pièce d'extrémité de réacteur nucléaire qui remédie à cet inconvénient. Dans cette pièce d'extrémité les parois latérales sont déformables élastiquement sous l'effet d'un effort de compression exercé selon l'axe longitudinal de l'assemblage combustible. Ces parois latérales jouent dont le rôle d'un ressort. Une pièce de ce type est beaucoup moins fragile que les ressorts de l'art antérieur. On réduit donc considérablement le risque que la partie rompue d'un ressort soit entraînée dans le circuit de refroidissement.

De façon plus précise, la pièce d'extrémité d'assemblage combustible de réacteur nucléaire de l'invention, qui comprend une plaque perforée, un cadre rigide et des parois latérales reliant le cadre rigide à la plaque perforée se caractérise en ce que les parois latérales sont déformables élastiquement sous l'effet d'une force de compression exercée sur l'assemblage selon son axe longitudinal.

Selon un mode de réalisation particulier, les parois latérales sont constituées de lamelles élastiques superposées, reliées entre elles par des tenons disposés en quinconce.

Pour des raisons de propriétés mécaniques, les parois latérales peuvent être constituées en un matériau diférent de celui de la plaque perforée et de celui du cadre. Dans ce cas, les parois latérales sont constituées par une tôle découpée pour former des lamelles élastiques superposées, puis pliée de manière à former un caisson carré, soudé d'une part à la plaque perforée, d'autre part au cadre rigide.

D'autres caractéristiques et avantages de l'invention apparaîtront mieux après la lecture de la description qui suit, faite en regard des dessins annexés sur lesquels :

la figure 1 représente la partie supérieure d'un assemblage combustible dans lequel la pièce d'extrémité comporte des ressorts de type classique ;

la figure 2 représente une vue en perspective d'une pièce d'extrémité d'assemblage combustible réalisée conformément à la présente invention ;

la figure 3 représente une vue latérale, partiellement ararchée de la pièce d'extrémité de la figure 2 à l'état comprimé.

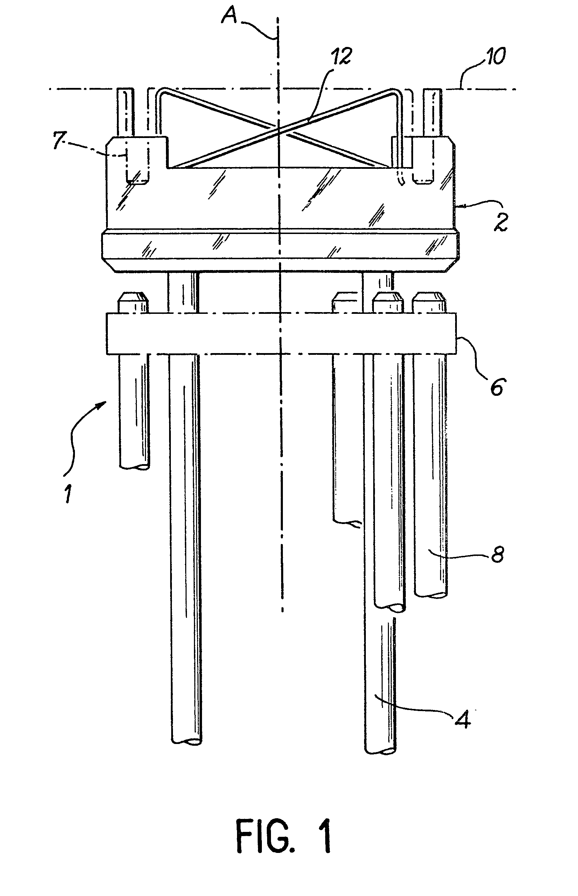

La figure 1 représente la partie supérieure d'un assemblage combustible 1 dont la pièce d'extrémité comporte des ressorts de type classique. L'assemblage 1, d'axe longitudinal A, se compose de deux pièces d'extrémité, dont seule la pièce d'extrémité supérieure 2 a été représentée. Les pièces d'extrémité supérieure et inférieure sont reliées entre elles par des tubes-guides 4. Les pièces d'extrémité et les tubes-guides forment la structure de l'assemblage. Sur les tubes-guides 4 sont disposées un certain nombre de grilles d'espacement 6 réparties à intervalles réguliers pour assurer, de façon classique, le supportage et l'espacement du faisceau des crayons combustibles 8.

Lorsqu'il est en place dans le cœur du réacteur nucléaire, l'assemblage combustible 1 est disposé entre une plaque inférieure et une plaque supérieure de cœur. Cette dernière a été schématisée sur la figure 1 par la ligne 10 représentée en traits mixtes. Un courant d'eau de refroidissement balaie de bas en haut les assemblages combustibles.

En raison des différences entre les coefficients de dilatation des matériaux constituant les assemblages combustibles et de ceux qui constituent les structures internes de la cuve, il est nécessaire de laisser un jeu entre l'assemblage 1 et l'une des plaques de cœur, la plaque supérieure ou éventuellement la plaque inférieure. Il est donc impossible de fixer de façon rigide les assemblages sur les plaques inférieure et supérieure du cœur. On dispose un élément élastique qui a pour but de maintenir l'assemblage contre la plaque opposée au jeu. La pièce d'extrémité 2 représentée sur la figure 1 comporte de façon connue quatre ressorts à lames 12 fixés par exemple par des vis de fixation sur la pièce d'extrémité 2. Des ressorts de ce type permettent de rattraper le jeu qui existe entre la partie supérieure de la pièce d'extrémité 2 et la plaque supérieure de cœur 10 et de maintenir en permanence l'assemblage 1 contre la plaque inférieure malgré la poussée du courant d'eau de refroidissement.

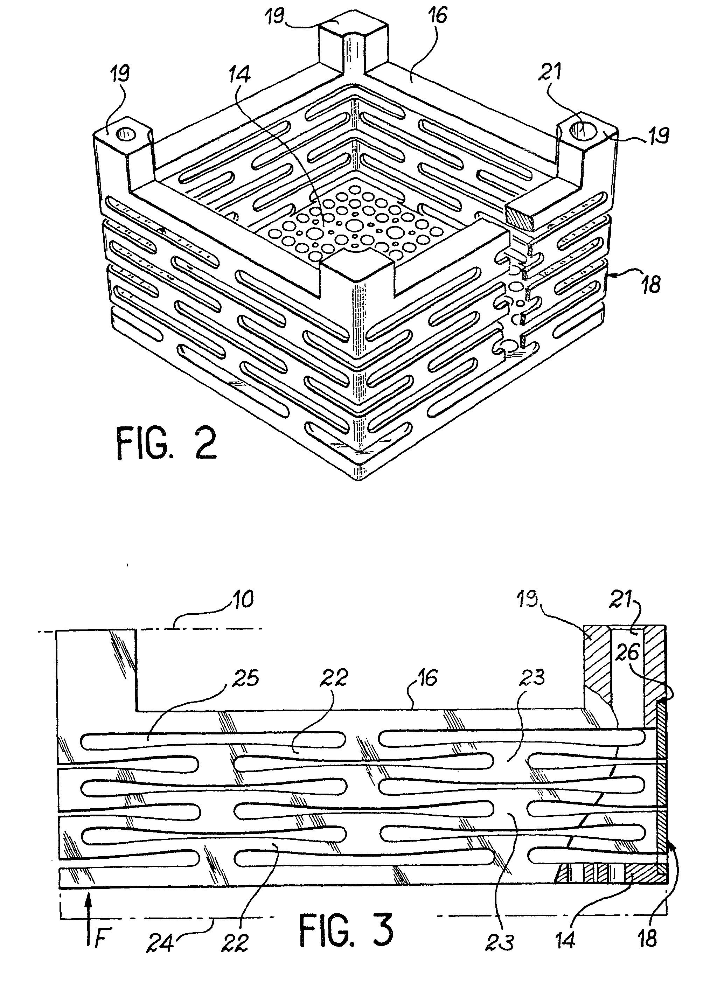

Cependant, comme on l'a rappelé, des ressorts de ce type peuvent se rompre et la partie rompue du ressort peut être entraînée dans le circuit de l'eau de refroidissement sous l'effet de la circulation de ce dernier. La pièce d'extrémité réalisée conformément à l'invention, représentée sur les figures 2 et 3, remédie à cet inconvénient.

Elle comporte une plaque rigide 14 sur laquelle sont fixés les tubes-guides 4 (voir figure 1). La plaque 14 est perforée d'une part pour la fixation des tubes-guides et d'autre part pour permettre la circulation de l'eau de refroidissement. La pièce d'extrémité comporte également un cadre 16 rigide. La plaque perforée 14 et le cadre 16 sont reliés par les parois latérales 18. L'assemblage est positionné de manière précise, par rapport aux plaques inférieure et supérieure du cœur. Dans ce but, des plots rigides 19 sont prévus aux quatre angles du cadre 16. Deux d'entre eux, diagonalement opposés, comportent des trous 21 qui permettent chacun de recevoir une broche de positionnement 7 fixée sur la plaque supérieure de cœur. Une différence de diamètre entre les deux trous 21 rend impossible une permutation de 180° de l'assemblage au cours du montage. Ce résultat pourrait être obtenu par un autre procédé par exemple par un détrompeur monté sur l'un des plots.

On a représenté sur la figure 3 une vue latérale de la pièce d'extrémité de la figure 2. Comme on peut le constater, chacune des quatre faces qui constituent la paroi latérale 18 est composée de lamelles de tôle 22 superposées, reliées entre elles par des tenons 23 disposés en quinconce. Entre les lamelles on trouve des ouvertures allongées 25. Cette structure est déformable comme le montre la figure où elle a été représentée en position comprimée. On a représenté en trait mixte 24 la forme de la pièce d'extrémité au repos. Lorsqu'un effort de compression F lui est appliqué, cet effort étant transmis par les plots 19 au cadre 16, puis réparti régulièrement par ce dernier dans toute la structure élastique 18, la pièce d'extrémité se déforme comme représentée sur la figure 3.

Sur la partie droite de la figure 3, on a représenté une coupe partielle qui montre le détail de fabrication de la pièce d'extrémité. La paroi latérale 18 est constituée par une tôle perforée de section carrée qui détermine les lamelles 22 et les tenons 23. Elle est ensuite soudée respectivement au cadre 16 et à la plaque perforée 14 par deux cordons de soudure 26. La plaque perforée 14 et la cadre 16 sont réalisés par exemple en acier inoxydable, tandis que la paroi latérale est découpée dans une tôle d'inconel.

Il est clair que la paroi latérale 18 constitue un système élastique beaucoup moins fragile que les ressorts de l'art antérieur. On diminue ainsi notablement les risques de ruptures. Dans l'hypothèse où une lamelle viendrait à se rompre, elle serait retenue par son autre extrémité et ne serait pas enstraînée dans le circuit de refroidissement.

On remarquera que cette paroi latérale constitue la seule liaison entre la plaque 14 et le cadre 16. Elle ne doit donc pas flamber sous l'effort de compression et elle doit empêcher tout décalage axial de la plaque 14 par rapport au cadre 16.

C'est la configuration carrée de la paroi latérale élastique et la liaison entre les lamelles 22, constituée par les tenons rigides 23 qui, sous compression, empêche le flambage et le décalage axial.

Enfin, on remarquera que la paroi latérale 18 est entièrement symétrique, de sorte que les contraintes sont parfaitement réparties.

Par conséquent, en plus de l'avantage découlant de la suppression des ressorts rapportés, la pièce d'extrémité de l'invention permet d'équilibrer l'effort élastique sur toute la périphérie de l'assemblage, alors qu'avec des ressorts de type classique, l'effort est transmis sur une seule diagonale.

## Revendications

1. Pièce d'extrémité d'assemblage combustible de réacteur nucléaire qui comprend une plaque perforée (14), un cadre rigide (16), et des parois latérales (18) reliant le cadre rigide (16) à la plaque perforée (14), ladite pièce d'extrémité étant positionnée par rapport aux structures du cœur du réacteur, caractérisée en ce que les parois latérales (18) sont déformables élastiquement sous l'effet d'un effort de compression de l'assemblage exercé sur la pièce d'extrémité selon l'axe longitudinal de l'assemblage.

2. Pièce d'extrémité selon la revendication 1, caractérisée en ce que les parois latérales (18) sont constituées par des lamelles élastiques (22) superposées, reliées entre elles par des tenons (23) disposés en quinconce.

3. Pièce d'extrémité selon la revendication 2, caractérisée en ce que les parois latérales (18) sont constituées par une tôle soudée d'une part à la plaque perforée (14) et d'autre part au cadre rigide (16).

## Claims

1. End member for a nuclear reactor fuel assembly comprising a perforated plate (14), a rigid frame (16), and side walls (18) connecting the rigid frame (16) to the perforated plate (14), said end member being locatable with respect to the core structure of the reactor, characterized in that the side walls (18) are elastically deformable under the effect of a compressive force from the assembly, exercised on the end member along the longitudinal axis of the assembly.

2. End member according to Claim 1, characterized in that the side walls (18) comprise superimposed flexible plates (22) interconnected by staggered tenons (23).

3. End member according to Claim 2, characterized in that the side walls (18) comprise a sheet welded at one end to the perforated plate (14) and to the rigid frame (16) at the other end.

## Patentansprüche

1. Kernreaktorbrennelementendstück mit einer durchlöcherten Platte (14), einem steifen Rahmen (16) und Seitenwänden (18), die den steifen Rahmen (16) mit der durchlöcherten Platte (14) verbinden, wobei das Endstück in bezug auf die Struktur des Reaktorkerns angeordnet ist, dadurch gekennzeichnet, daß die Seitenwände (18) unter der Wirkung einer auf das Endstück in Längsrichtung der Anordnung ausgeübten Druckkraft elastisch deformierbar sind.

2. Endstück nach Anspruch 1, dadurch gekennzeichnet, daß die Seitenwände (18) aus übereinander angeordneten elastischen Lamellen (22) bestehen, die miteinander durch gegeneinander versetzte Stege verbunden sind.

3. Endstück nach Anspruch 2, dadurch gekennzeichnet, daß die Seitenwände (18) aus einem Blech gebildet sind, daß einerseits an die durchlöcherte Platte (14) und andererseits an den steifen Rahmen (16) angeschweißt ist.

**FIG. 1**

FIG. 2

FIG. 3